# FASCICULE DE BREVET EUROPEEN

(11) **EP 4 303 517 B1**
(45) Date de publication et mention de la délivrance du brevet: **29.01.2025**
(21) Numéro de dépôt: 23181285.0
(22) Date de dépôt: 23.06.2023
(51) Int. Cl.: F28D 1/053, F28F 1/20, F28F 21/08, F28D 21/00

(54) **ÉCHANGEUR DE CHALEUR À TUBE DE CIRCULATION DE FLUIDE ET PROTECTION CONTRE LES MICROMÉTÉORITES**
WÄRMETAUSCHER MIT FLÜSSIGKEITSZIRKULATIONSROHR UND SCHUTZ GEGEN MIKROMETEORITEN
HEAT EXCHANGER WITH FLUID CIRCULATION TUBE AND PROTECTION AGAINST MICRO-METEORITES

(30) Priorité: 04.07.2022 FR 2206786
(43) Date de publication de la demande: 10.01.2024
(73) Titulaire: Liebherr-Aerospace Toulouse SAS, 31016 Toulouse Cedex 2 (FR)
(72) Inventeur: ROBERT, Julien, 31016 TOULOUSE CEDEX 2 (FR); MEUNIER, Stéphane, 31016 TOULOUSE CEDEX 2 (FR); RAMOUSSE, Arnaud, 31016 TOULOUSE CEDEX 2 (FR)
(74) Mandataire: Bringer IP

(56) Documents cités:
- DE-A1- 102015 201 808
- FR-A1- 3 066 012
- US-A1- 2014 041 227
- US-B2- 9 103 604
- US-B2- 9 897 383

## Description

### Domaine technique de l'invention

L'invention concerne un échangeur de chaleur et un procédé de fabrication dudit échangeur. En particulier, l'invention concerne un échangeur de chaleur pouvant être de type inox-aluminium ou autres combinaisons de deux matériaux pour une utilisation dans un contexte aéronautique ou spatial.

### Arrière-plan technologique

Les échangeurs de chaleur utilisés dans le domaine aéronautique ou spatial peuvent prendre la forme d'une enveloppe, de préférence en aluminium, entourant un tube, de préférence en acier inoxydable (couramment appelé inox), dans lequel circule un fluide, en particulier pour un transfert de chaleur du fluide vers l'extérieur de l'enveloppe via le tube et l'enveloppe. Un échangeur de chaleur selon le préambule de la revendication 1 est connu du document US 9 897 383 B2.

L'assemblage de l'échangeur est généralement réalisé par soudage ou brasage tendre de l'enveloppe avec le tube agencé dans ladite enveloppe.

L'utilisation de soudage ou de brasage tendre pour l'assemblage de l'échangeur présente plusieurs inconvénients.

L'assemblage par soudage on brasage tendre présente comme principal inconvénient une difficulté d'industrialisation pour la production de plusieurs pièces.

Pour répondre à ces problématiques, les inventeurs ont cherché à utiliser un brasage fort qui permettrait de faciliter l'industrialisation de l'échangeur grâce à l'usage d'un four. L'utilisation du brasage fort entraîne toutefois des problématiques liées à la température plus élevée du brasage fort, qui s'élève généralement à plus de 600°C contre moins de 450°C pour un brasage tendre.

En particulier, l'assemblage par brasage d'éléments de deux matériaux de nature différentes génère des dilatations différentielles entre les deux matériaux du fait de leur coefficient de dilatation thermique différents ce qui peut entraîner des décohésions de l'échangeur de chaleur dues au brasage. Cela peut remettre en cause la tenue mécanique de l'échangeur et des solutions spécifiques doivent être mises en place pour gérer ces contraintes thermiques lors du brasage.

En outre, l'utilisation d'un tel échangeur dans un domaine spatial nécessite la mise en place d'une protection du tube de circulation du fluide contre les micrométéorites qui pourraient engendrer des dégradations dudit tube, allant jusqu'à provoquer une fuite du fluide si le tube est percé.

Les inventeurs ont donc cherché une solution permettant de garantir la tenue mécanique de l'échangeur, la gestion de ces contraintes thermiques lors du brasage, et la protection du tube contre les micrométéorites.

### Objectifs de l'invention

L'invention vise à fournir un échangeur de chaleur et un procédé de fabrication dudit échangeur.

L'invention vise en particulier à fournir, dans au moins un mode de réalisation, un échangeur présentant un assemblage simple et industrialisable.

L'invention vise aussi à fournir, dans au moins un mode de réalisation de l'invention, un échangeur de chaleur adapté aux contraintes thermiques du brasage fort.

L'invention vise aussi à fournir, dans au moins un mode de réalisation de l'invention, un échangeur de chaleur comprenant une protection du tube de circulation de fluide contre les impacts de micrométéorites.

### Exposé de l'invention

Pour ce faire, l'invention concerne un échangeur de chaleur comprenant un tube de circulation d'un fluide et configuré pour permettre un échange de chaleur entre le fluide circulant dans le tube et une enveloppe entourant le tube,
caractérisé en ce que l'enveloppe est formée de deux barreaux profilés configurés pour entourer le tube dans au moins une partie de sa longueur, comprenant chacun :
   - un évidement destiné à recevoir le tube, la surface intérieure de l'évidement étant une portion de cylindre
   - une surface de jonction répartie de part et d'autre de l'évidement et configurée pour former une jonction avec l'autre barreau profilé suite à un brasage des barreaux,
et en ce que les surfaces de jonctions des barreaux profilés sont de formes complémentaires de sorte à former un interstice entre elles, au moins un élément de brasage étant agencé dans au moins une partie dudit interstice, et les surfaces de jonctions des barreaux profilés sont agencées selon des plans différents de sorte à ce que ledit interstice forme au moins une chicane de chaque côté du tube

Un échangeur selon l'invention est donc adapté au brasage fort via l'utilisation de deux barreaux agencés autour du tube et séparés par un interstice qui permettent de réduire les contraintes thermiques lors du brasage, en particulier d'éviter les déformations de l'échangeur. En particulier, la présence d'un barreau de chaque côté du tube permet de réduire l'effet « bilame » lorsque le tube et les barreaux sont fabriqués dans des matériaux différents, ayant des coefficients de dilatation thermique différents.

Le brasage fort est de préférence un brasage fort sous vide, en particulier via un four de brasage sous vide. L'élément de brasage est avantageusement créé via le brasage d'un feuillard de brasage inséré dans au moins une partie de l'interstice lors de la fabrication de l'échangeur de chaleur. On entend plus généralement par élément de brasage le résultat du brasage de tout élément d'apport permettant la jonction permanente entre les barreaux profilés ou entre chaque barreau profilé et le tube de circulation.

La présence de la chicane permet de faciliter l'assemblage, de réduire les risques d'hyperstatisme lors de la fixation des deux barreaux profilés au tube, et dans le cadre de l'utilisation de l'échangeur de chaleur dans un domaine spatial, d'offrir une protection du tube contre les micrométéorites en supprimant tout chemin direct de l'extérieur de l'échangeur de chaleur vers le tube. Les micrométéorites circulant dans l'interstice sont stoppées ou au moins ralenties au niveau de la chicane ce qui permet de réduire fortement ou totalement (selon les dimensions de la chicane) le risque de perçage du tube.

Selon une variante de l'invention, au moins une partie du brasage peut être mis en œuvre par application préalable d'une couche métallisée sur le tube avant l'assemblage avec les barreaux, puis brasage de l'échangeur assemblé. La couche métallisée est par exemple du nickel (ajoutée par nickelage) et de préférence appliquée par projection à froid ou *coldspray* en anglais, et le brasage final permet de former la brasure entre le tube et les évidements des barreaux. Le brasage permet en outre d'améliorer l'échange thermique entre le tube et le profilé.

Les barreaux sont par exemple fabriqués par extrusion, et de préférence en aluminium. Le tube est fabriqué de préférence en acier inoxydable. L'échangeur est ainsi un échangeur de chaleur dit « alu-inox ». D'autres matériaux peuvent être utilisés.

Un traitement de surface du tube ou des barreaux est possible, en particulier préalablement à l'assemblage de l'échangeur ou après l'assemblage, par exemple un traitement d'OAS (Oxydation Anodique Sulfurique), TCS PACS, de traitement dépôt physique en phase vapeur, autrement appelés PVD (pour *Physical Vapor Deposition* en anglais) et de traitement dépôt chimique en phase vapeur, autrement appelé CVD (pour *Chemical Vapor Deposition* en anglais).

Avantageusement et selon l'invention, au moins un élément de brasage est en outre agencé entre le tube de circulation et chaque évidement des barreaux profilés.

Selon cet aspect de l'invention, la présence de brasage entre le tube et les barreaux profilés permet d'augmenter les échanges thermiques entre ces deux éléments de l'échangeur de chaleur, améliorant ainsi les performances globales de l'échangeur de chaleur.

Avantageusement et selon l'invention, au moins un barreau profilé comprend des ailettes de refroidissement.

Selon cet aspect de l'invention, les ailettes de refroidissement permettent d'augmenter l'échange thermique avec l'extérieur pour améliorer les performances de l'échangeur de chaleur.

Avantageusement et selon l'invention, les deux barreaux profilés sont sensiblement rectilignes et identiques, et sont assemblés de sorte à ce qu'un barreau profilé présente une rotation de 180° autour d'un axe principal du tube de circulation par rapport à l'autre barreau profilé.

Selon cet aspect de l'invention, la fabrication des barreaux profilés est simplifiée car les barreaux sont identiques. La rotation d'un barreau par rapport à l'autre permet l'assemblage des deux pièces et forme la chicane au niveau de l'interstice.

Avantageusement et selon l'invention, les barreaux profilés s'étendent selon une direction principale longitudinale et comprennent, à chacune de leurs extrémités, une zone de transition sous forme de lèvres.

Selon cet aspect de l'invention, la zone de transition permet de limiter les concentrations de contraintes thermomécaniques résiduelles entre le tube et les barreaux profilés aux extrémités de l'échangeur de chaleur, en particulier aux extrémités des barreaux profilés.

L'invention concerne également un procédé de fabrication d'un échangeur de chaleur selon l'invention, caractérisé en ce qu'il comprend :
- une étape de mise en place d'au moins un feuillard de brasage sur au moins une partie de la surface de jonction d'au moins un barreau profilé,
- une étape d'insertion du tube de circulation du fluide dans au moins un évidement d'un des barreaux profilés,
- une étape de jonction des deux barreaux profilés autour du tube,
- une étape de brasage fort de l'échangeur de chaleur dans un four de brasage à une température supérieure à 450°C, de préférence supérieure à 600°C, de sorte à ce que chaque feuillard de brasage forme un assemblage permanent entre les barreaux et le tube.

Un procédé selon l'invention est facilement industrialisable grâce à l'utilisation d'un four à brasage, en particulier un four à brasage sous vide, qui remplace l'opérateur humain pour les brasages tendres. Le procédé est également plus simple, moins cher, plus fiable, et répétable. L'utilisation du four de brasage sous vide permet également d'avoir un choix plus large de matériaux pour l'échangeur de chaleur, notamment pour le tube de circulation de fluide, réduit l'oxydation, produit moins de polluants et permet un meilleur contrôle local de la température car la chaleur est transmise par rayonnement.

Avantageusement et selon une variante de l'invention, le procédé de fabrication comprend une étape préliminaire d'application d'une couche métallisée sur le tube, la couche métallisée formant une brasure entre le tube et les évidements des barreaux profilés.

L'invention concerne également un échangeur de chaleur et un procédé de fabrication caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective d'un échangeur de chaleur selon un premier mode de réalisation de l'invention ;
[Fig. 2] est une vue schématique en coupe transversale de l'échangeur de chaleur selon un premier mode de réalisation de l'invention.
[Fig. 3] est une vue schématique en coupe transversale d'un échangeur de chaleur selon un deuxième mode de réalisation de l'invention.
[Fig. 4] est une vue schématique en perspective d'un barreau de profilé d'un échangeur de chaleur selon un mode de réalisation de l'invention.

### Description détaillée d'un mode de réalisation de l'invention

Sur les figures, les échelles et les proportions ne sont pas strictement respectées et ce, à des fins d'illustration et de clarté. En particulier, les interstices des échangeurs sont représentés de façon à être visibles mais peuvent être plus étroit que représentés.

En outre, les éléments identiques, similaires ou analogues sont désignés par les mêmes références dans toutes les figures.

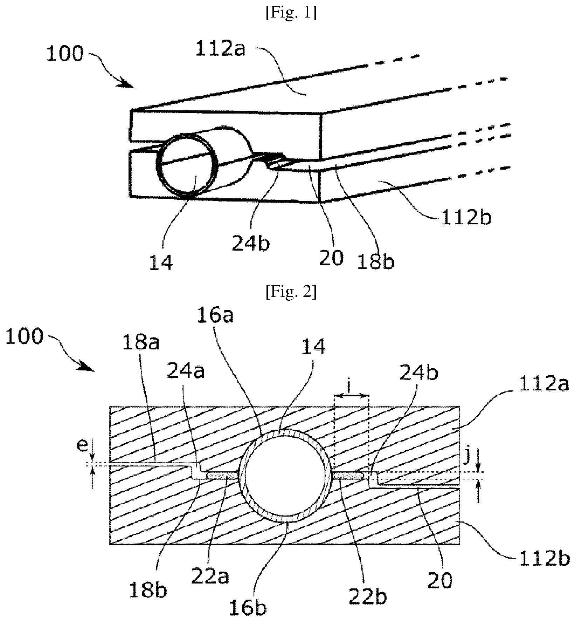

La figure 1 et la figure 2 illustrent schématiquement en perspective et en coupe transversale un échangeur 100 de chaleur selon un premier mode de réalisation de l'invention.

L'échangeur 100 comprend un tube 14 de circulation d'un fluide, l'échangeur 100 étant configuré pour permettre un échange de chaleur entre le fluide circulant dans le tube et une enveloppe entourant le tube. L'enveloppe est formée de deux barreaux profilés, dit barreau 112a supérieur et barreau 112b inférieur sensiblement identiques et configurés pour entourer le tube 14 dans au moins une partie de sa longueur, comprenant chacun un évidement 16a, 16b destiné à recevoir le tube 14, la surface intérieure de l'évidement étant une portion de cylindre.

Chaque barreau comprend également une surface 18a, 18b de jonction répartie de part et d'autre de l'évidement, sur la figure 2 à gauche et à droite du tube 14, et configurée pour former une jonction avec l'autre barreau profilé suite à un brasage des barreaux.

Les surfaces de jonctions des barreaux profilés sont de formes complémentaires de sorte à former un interstice 20 entre elles, au moins un élément de brasage, ici deux éléments de 22a, 22b de brasage étant agencés dans au moins une partie dudit interstice 20. Des éléments de brasage non visibles sont également présents entre le tube 14 de circulation et les barreaux profilés, au niveau des évidements 16a, 16b.

Les surfaces 18a, 18b de jonctions des barreaux profilés sont agencées selon des plans différents de sorte à ce que ledit interstice 20 forme au moins une chicane 24a, 24b de chaque côté du tube configurée, de sorte à protéger le tube 14 d'éventuelles micrométéorites entrant dans l'interstice 20 depuis l'extérieur. Les chicanes empêchent toute trajectoire directe depuis l'extérieur de l'échangeur vers le tube de circulation via l'interstice.

L'épaisseur e de l'interstice est par exemple de l'ordre de 0,25mm. Au niveau de l'élément de brasage, un jeu j par exemple compris entre 0,25mm et 1mm et un espacement i par exemple au moins égal à 1mm permet l'insertion, lors de la fabrication, du feuillard de brasage permettant de former l'élément de brasage. Sur ces figures et les suivantes, ces épaisseurs peuvent ne pas être à l'échelle pour que l'interstice et le jeu soient visibles.

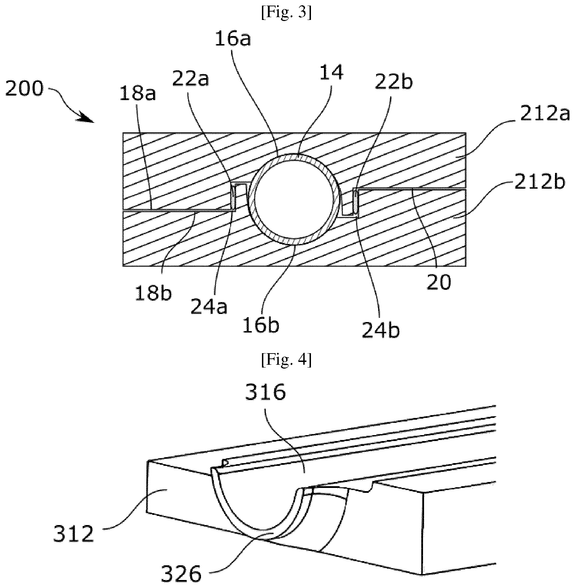

La figure 3 représente schématiquement en coupe transversale un échangeur 200 de chaleur selon un deuxième mode de réalisation de l'invention. Dans ce mode de réalisation, le barreau supérieur 212a et le barreau inférieur 212b présentent des formes géométriques identiques entre elles mais différentes des barreaux profilés du premier mode de réalisation. L'interstice 20, les chicanes 24a et 24b ainsi que les éléments 22a, 22b de brasage sont présents avec des fonctions identiques mais sont de formes différentes. Ces formes peuvent par exemple permettre d'augmenter la surface de brasage entre les deux barreaux ou entre chaque barreau et le tube de sorte à maximiser l'échange thermique, et/ou permettre de garantir qu'aucune micrométéorite ne peut atteindre le tube.

La figure 4 représente schématiquement en perspective un barreau 312 profilé d'un échangeur de chaleur selon un mode de réalisation de l'invention. Le barreau 312 comprend, à au moins une de ces extrémités, au niveau de l'évidement 316 destiné à accueillir le tube de circulation de fluide, une zone 326 de transition sous forme de lèvre permettant de prolonger l'accueil du tube de circulation de fluide à l'extrémité tout en limiter les contraintes thermomécaniques résiduelles.

L'invention ne se limite pas aux modes de réalisation décrits. En particulier, les barreaux profilés peuvent présenter des formes différentes. En particulier, la chicane peut présenter des formes différentes selon les contraintes de l'échangeur de chaleur, par exemple les contraintes de fabrication, d'assemblage et/ou de protection contre les micrométéorites.

## Revendications

1. Échangeur de chaleur comprenant un tube (14) de circulation d'un fluide et configuré pour permettre un échange de chaleur entre le fluide circulant dans le tube et une enveloppe entourant le tube, l'enveloppe étant formée de deux barreaux (112a, 112b ; 212a, 212b ; 312) profilés configurés pour entourer le tube (14) dans au moins une partie de sa longueur, comprenant chacun :
- un évidement (16a, 16b, 316) destiné à recevoir le tube, la surface intérieure de l'évidement étant une portion de cylindre, **caractérisé en ce que** chacun des barreaux comprend
- une surface (18a, 18b) de jonction répartie de part et d'autre de l'évidement et configurée pour former une jonction avec l'autre barreau profilé suite à un brasage des barreaux,
et **en ce que** les surfaces (18a, 18b) de jonctions des barreaux profilés sont de formes complémentaires de sorte à former un interstice (20) entre elles, au moins un élément (22a, 22b) de brasage étant agencé dans au moins une partie dudit interstice (20), et les surfaces (18a, 18b) de jonctions des barreaux profilés sont agencées selon des plans différents de sorte à ce que ledit interstice forme au moins une chicane (24a, 24b) de chaque côté du tube (14).

2. Échangeur de chaleur selon la revendication 1, **caractérisé en ce qu'**au moins un élément (22a, 22b) de brasage est obtenu par brasage fort dans un four de brasage sous vide d'un feuillard de brasage inséré dans au moins une partie dudit interstice (20).

3. Échangeur de chaleur selon l'une des revendications 1 ou 2, **caractérisé en ce qu'**au moins un élément de brasage est en outre agencé entre le tube (14) de circulation et chaque évidement (16a, 16b) des barreaux profilés.

4. Échangeur de chaleur selon l'une des revendications 1 à 3, **caractérisé en ce que** l'enveloppe est fabriquée en aluminium et le tube (14) est fabriqué en acier inoxydable.

5. Échangeur de chaleur selon l'une des revendications 1 à 4, **caractérisé en ce que** les barreaux (112a, 112b; 212a, 212b ; 312) profilés sont fabriqués par extrusion.

6. Échangeur de chaleur selon l'une des revendications 1 à 5, **caractérisé en ce qu'**au moins un barreau (112a, 112b; 212a, 212b ; 312) profilé comprend des ailettes de refroidissement.

7. Échangeur de chaleur selon l'une des revendications 1 à 6, **caractérisé en ce que** les deux barreaux (112a, 112b; 212a, 212b ; 312) profilés sont sensiblement rectilignes et identiques, et sont assemblés de sorte à ce qu'un barreau profilé présente une rotation de 180° autour d'un axe principal du tube de circulation par rapport à l'autre barreau profilé.

8. Échangeur de chaleur selon l'une des revendications 1 à 7, **caractérisé en ce que** les barreaux (112a, 112b; 212a, 212b ; 312) profilés s'étendent selon une direction principale longitudinale et comprennent, à chacune de leurs extrémités, une zone (326) de transition sous forme de lèvres.

9. Procédé de fabrication d'un échangeur (100, 200) de chaleur selon l'une des revendications 1 à 8, **caractérisé en ce qu'**il comprend :
- une étape de mise en place d'au moins un feuillard de brasage sur au moins une partie de la surface (18a, 18b) de jonction d'au moins un barreau profilé,
- une étape d'insertion du tube (14) de circulation du fluide dans au moins un évidement (16a, 16b) d'un des barreaux profilés,
- une étape de jonction des deux barreaux (112a, 112b ; 212a, 212b ; 312) profilés autour du tube (14),
- une étape de brasage fort de l'échangeur de chaleur dans un four de brasage à une température supérieure à 450°C, de préférence supérieure à 600°C, de sorte à ce que chaque feuillard de brasage forme un assemblage permanent entre les barreaux et le tube.

10. Procédé de fabrication selon la revendication 9, **caractérisé en ce qu'**il comprend une étape préliminaire d'application d'une couche métallisée sur le tube (14), la couche métallisée formant une brasure entre le tube (14) et les évidements (16a, 16b) des barreaux profilés.

## Patentansprüche

1. Wärmetauscher, der ein Fluidströmungsrohr (14) umfasst und ausgestaltet ist, einen Wärmeaustausch zwischen dem in dem Rohr strömenden Fluid und einer das Rohr umgebenden Umhüllung zu ermöglichen,
worin die Umhüllung aus zwei Profilstäben (112a, 112b; 212a, 212b; 312) gebildet ist, die ausgestaltet sind, das Rohr (14) auf mindestens einem Teil seiner Länge zu umgeben, worin jeder Stab umfasst:
- eine Aussparung (16a, 16b, 316), die dazu bestimmt ist, das Rohr aufzunehmen, worin die Innenfläche der Aussparung ein Teil eines Zylinders ist, **dadurch gekennzeichnet, dass** jeder der Stäbe umfasst:
- eine Verbindungsfläche (18a, 18b), die auf beiden Seiten der Aussparung verteilt und ausgestaltet ist, nach dem Verlöten der Stäbe eine Verbindung mit dem anderen Profilstab auszubilden,
und darin dass die Verbindungsflächen (18a, 18b) der Profilstäbe komplementär geformt sind, um zwischen ihnen einen Spalt (20) zu bilden, worin mindestens ein Lötelement (22a, 22b) in mindestens einem Teil des Spalts (20) angeordnet ist, und die Verbindungsflächen (18a, 18b) der Profilstäbe in verschiedenen Ebenen angeordnet sind, so dass der Spalt auf jeder Seite des Rohrs (14) mindestens eine Ablenkungsfläche (24a, 24b) ausbildet.

2. Wärmetauscher nach Anspruch 1, **dadurch gekennzeichnet, dass** mindestens ein Lötelement (22a, 22b) durch Hartlöten eines in mindestens einen Teil des Spaltes (20) eingefügten Lötstreifens in einem Vakuum-Lötofen erhalten wird.

3. Wärmetauscher nach einem der Ansprüche 1 oder 2, **dadurch gekennzeichnet, dass** zwischen dem Strömungsrohr (14) und jeder Aussparung (16a, 16b) der Profilstäbe zusätzlich mindestens ein Lötelement angeordnet ist.

4. Wärmetauscher nach einem der Ansprüche 1 bis 3, **dadurch gekennzeichnet, dass** das Gehäuse aus Aluminium und das Rohr (14) aus rostfreiem Stahl gefertigt ist.

5. Wärmetauscher nach einem der Ansprüche 1 bis 4, **dadurch gekennzeichnet, dass** die Profilstäbe (112a, 112b; 212a, 212b; 312) durch Extrusion gefertigt sind.

6. Wärmetauscher nach einem der Ansprüche 1 bis 5, **dadurch gekennzeichnet, dass** mindestens ein Profilstab (112a, 112b; 212a, 212b; 312) Kühlrippen aufweist.

7. Wärmetauscher nach einem der Ansprüche 1 bis 6, **dadurch gekennzeichnet, dass** die beiden Profilstäbe (112a, 112b; 212a, 212b; 312) im Wesentlichen gerade und identisch sind und so zusammengesetzt sind, dass ein Profilstab um 180° um eine Hauptachse des Strömungsrohrs in Bezug auf den anderen Profilstab gedreht ist.

8. Wärmetauscher nach einem der Ansprüche 1 bis 7, **dadurch gekennzeichnet, dass** die Profilstäbe (112a, 112b; 212a, 212b; 312) sich in einer Hauptlängsrichtung erstrecken und an ihren Enden jeweils einen lippenförmigen Übergangsbereich (326) aufweisen.

9. Verfahren zur Herstellung eines Wärmetauschers (100, 200) nach einem der Ansprüche 1 bis 8, **dadurch gekennzeichnet, dass** es umfasst:
- einen Schritt des Anbringens mindestens eines Lötstreifens auf mindestens einem Teil der Verbindungsfläche (18a, 18b) mindestens eines Profilstabs,
- einen Schritt des Einsetzens des Fluidströmungsrohrs (14) in mindestens eine Aussparung (16a, 16b) eines der Profilstäbe,
- einen Schritt des Verbindens der beiden Profilstäbe (112a, 112b; 212a, 212b; 312) um das Rohr (14),
- einen Schritt des Hartlötens des Wärmetauschers in einem Lötofen bei einer Temperatur von mehr als 450°C, vorzugsweise mehr als 600°C, so dass jeder Lötstreifen eine dauerhafte Verbindung zwischen den Stäben und dem Rohr ausbildet.

10. Herstellungsverfahren nach Anspruch 9, **dadurch gekennzeichnet, dass** es einen vorbereitenden Schritt des Aufbringens einer metallisierten Schicht auf das Rohr (14) umfasst, worin die metallisierte Schicht eine Lötverbindung zwischen dem Rohr (14) und den Aussparungen (16a, 16b) der Profilstäbe ausbildet.

## Claims

1. Heat exchanger comprising a fluid flow tube (14) and configured to allow an exchange of heat between the fluid flowing in the tube and an enclosure surrounding the tube,
the enclosure being formed of two profiled bars (112a, 112b; 212a, 212b; 312) configured to surround the tube (14) over at least one part of its length, each comprising:
- a recess (16a, 16b, 316) intended to receive the tube, the inner surface of the recess being a portion of a cylinder, **characterized in that** each of the bars comprises:
- a joint surface (18a, 18b) distributed on either side of the recess and configured to form a joint with the other profiled bar following soldering of the bars,
and **in that** the joint surfaces (18a, 18b) of the profiled bars are complementary in shape so as to form a gap (20) therebetween, at least one soldering element (22a, 22b) being arranged in at least one part of said gap (20), and the joint surfaces (18a, 18b) of the profiled bars are arranged in different planes such that said gap forms at least one baffle (24a, 24b) on each side of the tube (14).

2. Heat exchanger as claimed in claim 1, **characterized in that** at least one soldering element (22a, 22b) is obtained by hard soldering in a vacuum soldering furnace of a soldering strip inserted in at least one part of said gap (20).

3. Heat exchanger as claimed in any one of claims 1 or 2, **characterized in that** at least one soldering element is further arranged between the flow tube (14) and each recess (16a, 16b) of the profiled bars.

4. Heat exchanger as claimed in any one of claims 1 to 3, **characterized in that** the enclosure is made from aluminum and the tube (14) is made from stainless steel.

5. Heat exchanger as claimed in any one of claims 1 to 4, **characterized in that** the profiled bars (112a, 112b; 212a, 212b; 312) are made by extrusion.

6. Heat exchanger as claimed in any one of claims 1 to 5, **characterized in that** at least one profiled bar (112a, 112b; 212a, 212b; 312) comprises cooling fins.

7. Heat exchanger as claimed in any one of claims 1 to 6, **characterized in that** the two profiled bars (112a, 112b; 212a, 212b; 312) are substantially straight and identical and are assembled such that one profiled bar is rotated by 180° about a main axis of the flow tube with respect to the other profiled bar.

8. Heat exchanger as claimed in any one of claims 1 to 7, **characterized in that** the profiled bars (112a, 112b; 212a, 212b; 312) extend in a main longitudinal direction and comprise, at each of their ends, a transition zone (326) in the form of lips.

9. Method of manufacturing a heat exchanger (100, 200) as claimed in any one of claims 1 to 8, **characterized in that** it comprises:
- a step of placing at least one soldering strip on at least one part of the joint surface (18a, 18b) of at least one profiled bar,
- a step of inserting the fluid flow tube (14) in at least one recess (16a, 16b) of one of the profiled bars,
- a step of joining the two profiled bars (112a, 112b; 212a, 212b; 312) around the tube (14),
- a step of hard soldering the heat exchanger in a soldering furnace at a temperature greater than 450°C, preferably greater than 600°C, such that each soldering strip forms a permanent assembly between the bars and the tube.

10. Method of manufacture as claimed in claim 9, **characterized in that** it comprises a preliminary step of applying a metallized layer to the tube (14), the metallized layer forming a solder joint between the tube (14) and the recesses (16a, 16b) of the profiled bars.
